# EUROPEAN PATENT APPLICATION

(11) **EP 3 147 750 A1**
(43) Date of publication of application: **29.03.2017**
(21) Application number: 16164841.5
(22) Date of filing: 12.04.2016
(51) Int. Cl.: G06F 1/26

(54) **POWER SUPPLY AND COMPUTER CHASSIS**

(30) Priority: 25.09.2015 CN 201510622478
(71) Applicant: Cooler Master Technology Inc., New Taipei City 235 (TW)
(72) Inventor: CHEN, Chun-Lin, 235 Taipei City (TW)
(74) Representative: Viering, Jentschura & Partner mbB Patent- und Rechtsanwälte

(57) **Abstract**

A power supply (11, 11') and a computer chassis (1) are provided. The power supply (11, 11') comprising a main power supply unit (111, 111') and an application power unit (112) is used for electrically coupling to an external AC power (AC). The main power supply unit (111, 111') converts the external AC power (AC) to a DC operation power in an operation mode. The application power unit (112) converts the external AC power (AC) to a DC application voltage for an application module (12, 12', 12a, 12b). The power supply (11, 11') and the application module (12, 12', 12a, 12b) are installed to a chassis frame (14) of the computer chassis (1). When the power supply (11, 11') receives the external AC power (AC), regardless of whether the main power supply unit (111, 111') outputs the DC operation power or not, the application power unit (112) continuously outputs the DC application voltage to the application module (12, 12', 12a, 12b). Accordingly, no matter what the operation status of the computer is, the power supply (11, 11') and the computer chassis (1) can provide the charging function.

## Description

### BACKGROUND OF THE INVENTION

### 1. Field of the Invention

The instant disclosure relates to a personal computer (PC); in particular, to a power supply and a computer chassis.

### 2. Description of Related Art

A personal computer usually has computer chassis, used for installing a variety of functional modules, such as a power supply, a mother board, a variety of interface/connectors and so on. The power supply converts an external alternating current (AC) power to a direct current (DC) power source. In general, the power supply has a normal operation mode and a standby mode. In the normal operation mode, the power supply provides power to the mother board normally. In the standby mode, the power supply usually provides a 5V standby voltage to the universal serial bus (USB). However, in order to provide standby chargeability with more efficiency, the general 5V standby voltage may not comply with the demand.

### SUMMARY OF THE INVENTION

The object of the instant disclosure is to provide a power supply and a computer chassis, for providing a charging function.

In order to achieve the aforementioned object, according to an embodiment of the instant disclosure, a power supply is provided. The power supply is used for electrically coupling to an external AC power. The power supply comprises a main power supply unit and an application power unit. The main power supply unit converts the external AC power to a DC operation power in an operation mode. The application power unit converts the external AC power to a DC application voltage, and continuously outputs the DC application voltage in a non-operation mode.

In order to achieve the aforementioned objects, according to an embodiment of the instant disclosure, a computer chassis is provided. The computer chassis comprises a chassis frame, a power supply and an application module. The power supply is installed to the chassis frame. The power supply is electrically coupled to an external AC power. The power supply provides an operation voltage in an operation mode. The power supply provides a DC application voltage in a non-operation mode according to the external AC power. The application module is installed to the chassis frame. The application module is electrically coupled to the DC application voltage. The application module operates according to the DC application voltage.

In summary, a power supply and a computer chassis are provided. The power supply is used to connect with the application module of the computer chassis. Even when not in the normal operation mode (such as when the computer is in standby, hibernate, sleep or shut down), the power supply still can provide a charging function.

In order to further the understanding regarding the instant disclosure, the following embodiments are provided along with illustrations to facilitate the disclosure of the instant disclosure.

### BRIEF DESCRIPTION OF THE DRAWINGS

Fig. 1A shows a circuit block diagram of a power supply connecting to an application module of a computer chassis according to an embodiment of the instant disclosure;
Fig. 1B shows a circuit block diagram of a power supply connecting to an application module of a computer chassis according to another embodiment of the instant disclosure;
Fig. 1C shows a circuit block diagram of a power supply connecting to an application module of a computer chassis according to another embodiment of the instant disclosure;
Fig. 1D shows a circuit block diagram of a power supply connecting to an application module of a computer chassis according to another embodiment of the instant disclosure;
Fig. IE shows a circuit block diagram of a power supply connecting to an application module of a computer chassis according to another embodiment of the instant disclosure;
Fig. 2 shows an appearance diagram of a power supply according to an embodiment of the instant disclosure;
Fig. 3A shows a schematic diagram of a computer chassis installed with an application module according to an embodiment of the instant disclosure;
Fig. 3B shows a schematic diagram of a computer chassis installed with an application module according to another embodiment of the instant disclosure;
Fig. 4 shows a circuit block diagram of a power supply connecting to an application module of a computer chassis according to another embodiment of the instant disclosure; and
Fig. 5 shows an appearance diagram of a power supply according to another embodiment of the instant disclosure.

### DETAILED DESCRIPTION OF THE PREFERRED EMBODIMENTS

The aforementioned illustrations and following detailed descriptions are exemplary for the purpose of further explaining the scope of the instant disclosure. Other objectives and advantages related to the instant disclosure will be illustrated in the subsequent descriptions and appended drawings.

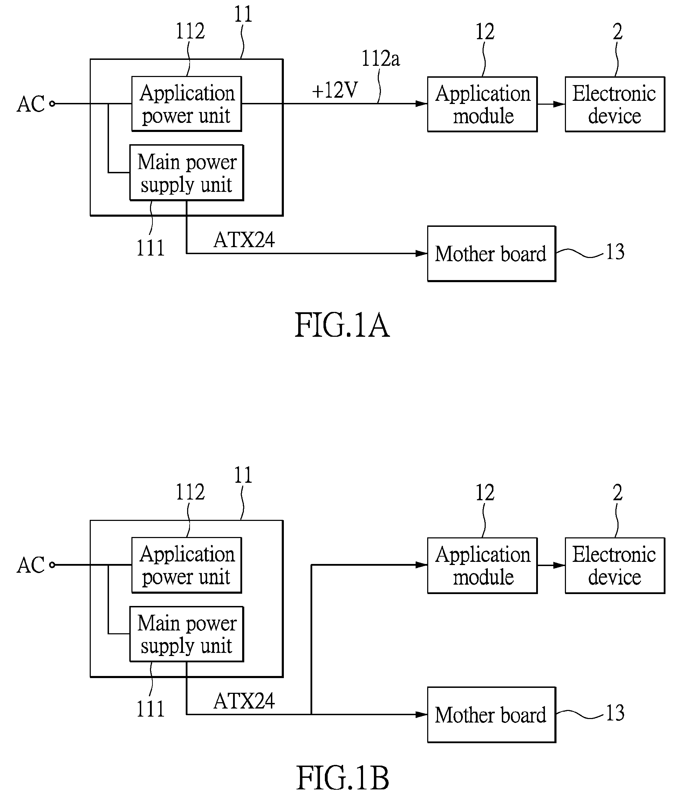

Please refer to Fig. 1A showing a circuit block diagram of a power supply connecting to an application module of a computer chassis according to an embodiment of the instant disclosure. A power supply 11 comprises a main power supply unit 111 and an application power unit 112. The main power supply unit 111 and the application power unit 112 of the power supply 11 both convert an external alternating current power AC to a direct current operation power. Also, the main power supply unit 111 and the application power unit 112 provide electrical power independently of each other.

As shown in Fig. 1A, the power supply 11 provides +12V DC power to the application module 12 through the power line 112a. Additionally, an advanced technology extended power interface ATX24 also provides a power supply path for the DC power from the power supply 11 to the application module 12. The power supply 11 is coupled to the mother board 13 and the application module 12 through the advanced technology extended power interface ATX24. The mother board 13 is coupled to the application module 12 through a universal serial bus (USB) 131. In this embodiment, the main power supply unit 111 is powered by the advanced technology extended power interface ATX24, but the instant disclosure is not so restricted. In other embodiments, the main power supply unit 111 also can be powered by other power interfaces such as mini-ATX24, micro-ATX24 or BTX24 and so on.

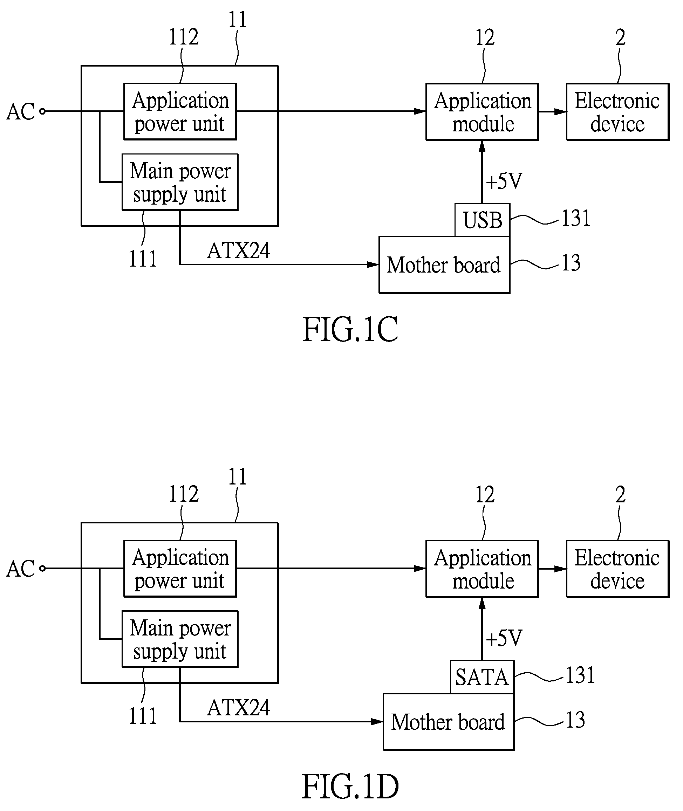

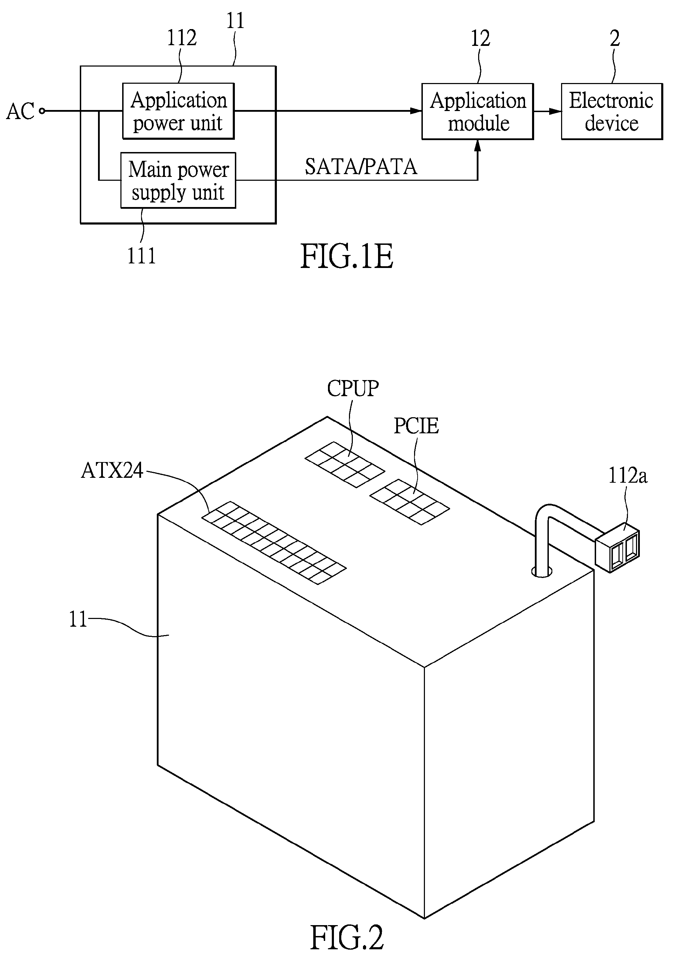

The main power supply unit 111 of the power supply 11 has an operation mode and a standby mode. The operation mode is when the mother board 13 of the computer is power on. The main power supply unit 111 converts the external alternating current power AC to a DC application voltage. The DC application voltage is a normal operation power for the mother board or other functional circuit of the computer. As shown in Fig. 1, the main power supply unit 111 provides voltages of +12V, +5V and 3.3V to the mother board 13 through the advanced technology extended power interface ATX24. Additionally, when the power supply 11 further connects to other functional unit of the computer, the power supply 11 also can provide DC power by using other power interface. As shown in Fig. 2, power supply 11 also has a central processing unit (CPU) power interface CPUP, for providing +12V power to the central processing unit. The power supply 11 also has a power interface of peripheral component interconnect Express (PCI-E), for providing power of +12V and +3.3V to a related functional circuit board such as a display card. Furthermore, in addition to the advanced technology extended power interface ATX24, the CPU power interface CPUP, and the power interface of peripheral component interconnect Express PCIE, the power supply 11 also can have other power interfaces such as a power interface of serial advanced technology attachment (SATA), a power interface of the parallel advanced technology attachment (PATA), or a power interface of Floppy. The aforementioned power interfaces are examples for describing types of power interfaces used in the computer, however the instant disclosure is not restricted thereto.

On the other hand, the standby mode is when the power of the mother board 13 is shut down or the mother board 13 is operating in a hibernate mode (or sleep mode). At the same time, the main power supply unit 111 does not provide power to the mother board or other functional circuit board.

Please refer to Fig. 1A again. The application power unit 112 converts the external alternating current power AC to the DC application voltage, and provides the DC application voltage to the application module 12. In this embodiment, the DC application voltage is +12V, but the instant disclosure is not restricted thereto. When the power supply 11 receives the external alternating current power AC, no matter whether the main power supply unit 111 outputs the DC operation power or not (that is, no matter whether the mode is the mentioned operation mode or a non-operation mode), the application power unit 112 continuously outputs the DC application voltage to the application module 12.

Furthermore, referring Fig. 1A, Fig. 1B, Fig. 1C and Fig. 1D, the power providing path of the power supply 11 providing electrical power to the application module 12 at least has the following several embodiments, but the instant disclosure is no so restricted. The first embodiment is the application power unit 112 of the power supply 11 directly providing +12V power to the application module 12 which is shown in Fig. 1A and has been described above. The +12V power is irrelevant to the operation of the mother board 13 or other functional circuit board. As long as the power supply 11 receives external alternating current power AC, the application module 12 can continuously receive the +12V power directly come from the power supply 11. For example, in the standby mode of the computer, the power supply 12 can still provide DC power to the application module 12. However, the instant disclosure does not restrict the voltage value of the DC power provided from the power supply 11 to the application module 12.

Furthermore, referring to Fig. 1B, the power supply path of the second embodiment is that the power supply 11 transfers +5V standby power to the application module 12 through the advanced technology extended power interface ATX24. That is, when the power supply 11 provides DC power to the mother board 13, the power supply 11 also provides standby voltage 5V to the application module 12.

Please refer to Fig. 1B again. In some other embodiments, the advanced technology extended power interface ATX24 can provide power to the application module 12 and the mother board 13 by using a voltage conversion unit (which is not shown in the figure). The voltage conversion unit can be a boost converter unit, a buck converter unit, or a voltage dividing unit. However, the instant disclosure is not so restricted.

Furthermore, referring to Fig. 1C and Fig. 1D, in the third embodiment, there are two power supply paths for the application module 12. One power supply path is the application power unit 112 of the power supply 11 directly providing power to the application module 12. Another power supply path is the power supply 11 provides DC power to the mother board 13 through the advanced technology extended power interface ATX24, and the mother board 13 can provide power to the application module 12 by using an interface on it. As shown in Fig. 1C, the universal serial bus (USB) 131 of the mother board 13 provides +5V power to the application module 12. As shown in Fig. 1D, the mother board 13 uses its advanced technology extended power interface ATX24 to provide +5V and +12V power to the application module 12. It can be seen, the power paths of the embodiments shown in Fig. 1C and Fig. 1D must pass the mother board 13. Therefore, when the computer is in standby mode, the application module 13 cannot obtain power from the mother board 13 because the mother board 13 does not provide power. It is worth mentioning that this instant disclosure does not restrict the DC power providing path from the power supply 11 to the application module 12. The aforementioned power supply paths are only to give assistance for description.

Furthermore, referring to Fig. IE, in the fourth embodiment, providing power to the application module 13 can be achieved by the main power supply unit 111 of the power supply 11. The main power supply unit 111 directly provides power to the application module 12. As shown in Fig. 1E, the main power supply unit 111 of the power supply 11 can use the power interface of serial advanced technology attachment (SATA) to provide +12V or +5V power to the application module 12. Alternatively, the main power supply unit 111 of the power supply 11 can also use the power interface of the parallel advanced technology attachment (PATA) to provide +12V or +5V power to the application module 12.

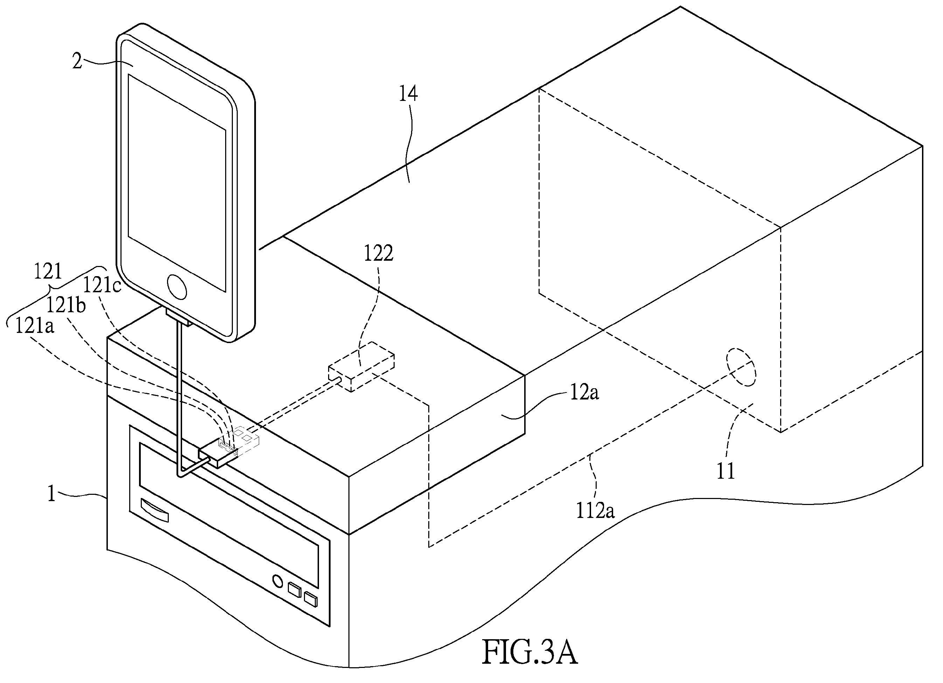

In the following, please refer to Fig. 3A showing a schematic diagram of a computer chassis installed with an application module according to an embodiment of the instant disclosure. The computer chassis 1 comprises an application module 12. A chassis frame 14 of the computer chassis 1 is used for installing the power supply 11. However, the instant disclosure does not restrict the structure of the chassis frame 14. The chassis frame 14 depicted in Fig. 3A is exemplary provided for ease of explanation. For another example, the power supply of the computer chassis is generally divided into top-mounted type and bottom-mounted type. The position of the power supply shown in Fig. 3A is only an exemplary position. However, this instant disclosure does not limit the position of the power supply 11 installed to the computer chassis. Referring to Fig. 3A, the application module can use the architecture shown in Fig. 1A, that is the power supply 12 receives the DC application voltage through the power line 112a. However, in other embodiments, the application module 12 can obtain DC power by making use of another power interface of the power supply, or obtain DC power from the mother board (not shown in Fig. 3A). For example, by using the architecture shown in Fig. 1B, Fig. 1C or Fig. 1D, the voltage value of the DC voltage received by the application module 12 and the power providing path from the power supply 11 to the application module 12 has already been described, thus the information is not repeated here.

The application module 12 can be a charging module or an electronic module with other function. In this embodiment, the application module 12 is illustrated as a charging module, but the instant disclosure is not so restricted. In this embodiment, the charging module can be a QC2.0 (Quick charge 2.0) charging module. The charging module can be a wired charging module or a wireless charging module. When the application module 12 is a QC2.0 charging module, the QC2.0 charging module can receive +5V or + 12V DC power, and the QC2.0 charging module can perform voltage conversion, so as to charge the electronic device 2 connected to (or wireless link with) the QC2.0 charging module. The mentioned electronic device can be a mobile device such as a smart phone or a tablet PC, for example. However, the instant disclosure is not so restricted. Furthermore, the application module 12 does not necessarily receive +5V DC power from the power supply. The application module 12 can receive +12V DC power, for another example. Therefore, the QC2.0 charging module used as the application module 12 can have a voltage regulator unit for regulating the received DC application voltage to the required charging voltage. In practical applications, the application module 12 can be a light module or a light control module, such as an LED module, an LED controller, a UV LED module, a UV LED controller, UV light bar module and so on. Furthermore, the application module 12 can be a fan or a fan control module, but the instant disclosure is not so restricted.

Furthermore, the application module 12 can be a removable charging module. That is, the application module 12 and the chassis frame 14 are separable. A user or manufacturer can select the required application module to be installed to the chassis frame 14. For example, the user can select a wired QC2.0 charging module or a wireless QC2.0 charging module to be installed to the chassis frame.

Furthermore, referring Fig. 3A again, the application module 12a shown in Fig. 3A is an exemplary embodiment of the aforementioned application module 12. When the application module 12a is a wired QC2.0 charging module, the application module 12a comprises a voltage regulator unit 122 and a charging connector 121. The voltage regulator unit 122 converts the received electrical power to a proper voltage for being transmitted to the charging connector 121. The electrical power received by the voltage regulator unit 122 can be the DC power from the power line 112a of the power supply 11 shown in Fig. 3A, but the instant disclosure is not so restricted. The power source of the application module has been described above, thus the information is not repeated here. The charging connector 121 is disposed on a surface of the application module 12a. The charging connector 121 has three electrical contact points which are +12V, grounding GND and +5V, such as a pin 121a, a pin 121b and a pin 121c shown in Fig. 3A. A corresponding port of the electronic device 2 can connect the charging connector 121, such that the electronic device 2 can be charged. It should be noted that, based on design considerations, the structure of the charging connector 121 can have a variety of types as long as the charging connector 121 has three electrical contact points with voltage of +12V/GND/+5V. This instant disclosure does not limit the appearance or the structure of the charging connector 121.

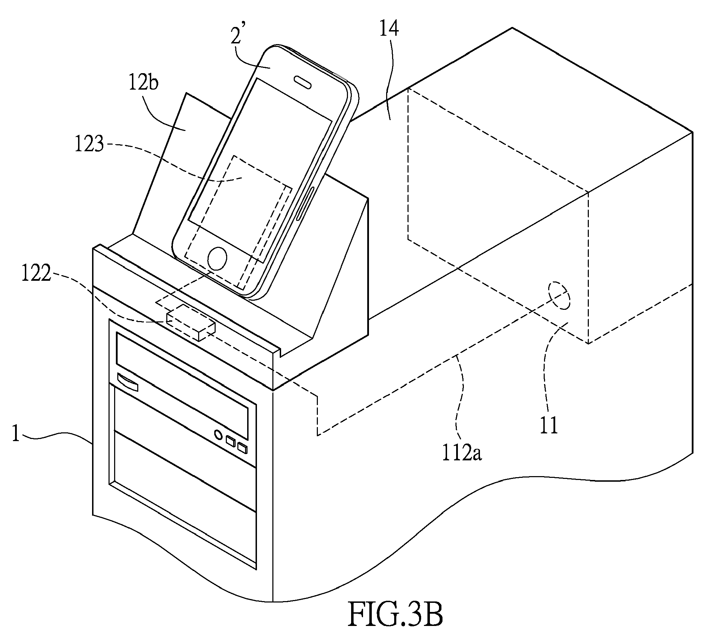

In another embodiment, please refer to Fig. 3B. The embodiment of Fig. 3B is replacing the wired application module 12a (wired QC2.0 charging module) of Fig. 3A by a wireless application module 12b. When the application module 12b is a wireless QC2.0 charging module, the wireless QC2.0 charging module is provided by replacing the wired charging connector 121 with a wireless charging interface 123, in order to change the wired charging type to a wireless charging type. An electronic device 2' can be charged by letting the electronic device 2' close to the wireless charging interface 123. Wireless charging technology would be appreciated by one of ordinary skill in the art, thus there is no need to go into detail. Also, the instant disclosure does not restrict the appearance of the application modules 12a, 12b. The appearance of the application modules 12a, 12b are only provided as assistance for explanation.

Furthermore, the application module 12 has more extensive embodiments. For example, the application module 12 can be an air filter module cooperating with the aforementioned UV LED or UV light bar to provide bactericidal effect, even with the effect of generating negative ions. Furthermore, the application module 12 can be a IOT (Internet of Things) controller, in which the IOT controller can control electrical appliances used at home. The application module 12 can also be a humidification module, a fragrance module, a maintenance module and so on. In other words, the specification of the application module 12 disclosed in the instant disclosure is not so restricted, and the manufacturer can make different designs of the application module 12.

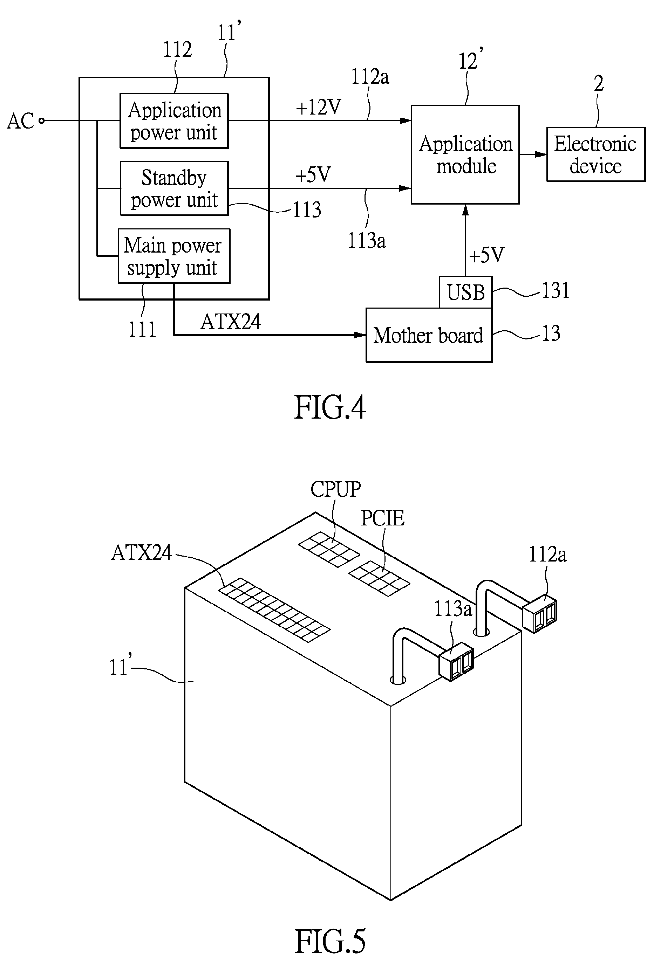

Please refer to Fig. 4 showing a circuit block diagram of a power supply connecting to an application module of a computer chassis according to another embodiment of the instant disclosure. Compared with Fig. 1A, a power supply 11' not only has the main power supply unit 111 and the application power unit 112, but also a standby power unit 113. In order to supply electrical power, the main power supply unit 111, the application power unit 112 and the standby power unit 113 can be operated independently of each other. The standby power unit 113 provides the conventional +5V standby voltage widely used in computer systems, such that the computer system can output +5V voltage in the status of standby, hibernation, sleep or shut down. For example, the standby power unit 113 can be the universal serial bus (USB) installed on the computer chassis. Compared to the standby power unit 113, the application power unit 112 does not output 5V DC application voltage, but the 12V DC application voltage. That is, the DC application voltage (+12V) is different from the standby voltage (+5V). When the computer system is standby, the standby power unit 113 is used to convert the external alternating current power AC to the standby voltage. And, the standby power unit 113 can provide the standby voltage to the application module 12' through the power line 113a. That is, when the power supply 11' receives the external alternating current power AC, the standby power unit 113 continuously outputs +5V standby voltage no matter whether the main power supply unit 111 outputs the DC operation power or not. The application module 12' is significantly identical to the application module 12 except for differences specified in the following. The application module 12' further receives DC power from the power line 113a. According to this embodiment, it can be seen that the DC application voltage outputted by the application power unit 112 or the +5V standby voltage outputted by the standby power unit 113 can be provided to the application module 12' for being the charging power source. When a QC2.0 charging module is selected as the application module 12', the application module 12' can regulate the received voltage to a specific voltage used for charging the electronic device 2 no matter what the voltage value outputted by the application power unit 112 and the standby power unit 113 is.

Then, please refer to Fig. 4 in conjunction with Fig. 5. Fig. 5 shows an appearance diagram of a power supply according to another embodiment of the instant disclosure. Except the advanced technology extended power interface ATX24, the CPU power interface CPUP, the power interface of peripheral component interconnect Express PCIE, and the +12V power line 112a, the power supply 11' further has a power line 113a with +5V standby voltage. Referring to Fig. 3A/or Fig. 3B, similar to the power line 112a, the power line 113a can be connected to the application module 12' in the same way.

According to above descriptions, the provided power supply and the computer chassis disclose that the power supply is used to connect to the application module of the computer chassis. The power supply can provide charging function even in non-operation mode. In other words, the application module of the computer chassis can provide a charging interface when the computer is in standby mode. A user can let an electronic device be charged by the computer conveniently, in which the charging status is irrelevant to the operation status of the computer. When the application module is a removable application module, the removable application module can be a wired application module or a wireless application module. The user or manufacturer can select a proper application module to be installed based on requirements, and the application module is removable and replaceable. The wired application module can exemplarily provide QC2.0 fast charging. The wireless charging module can provide a convenient means of charging, in which power line wiring is not required. Additionally, the provided power supply and the computer chassis of the instant disclosure provide a variety of power paths to the application module. It can take into account requirements of the normal working power supply and standby power supply, and design flexibility is also provided.

## Claims

1. A power supply (11, 11'), suitable for electrically coupling to an external AC power (AC), the power supply (11, 11') comprising:
a main power supply unit (111), converting the external AC power (AC) to a DC operation power in an operation mode;
an application power unit (112), converting the external AC power (AC) to a DC application voltage, and continuously outputting the DC application voltage in a non-operation mode.

2. The power supply (11, 11') according to claim 1, further comprising:
a standby power unit (113), converting the external AC power (AC) to a standby voltage in a standby mode, and continuously outputting the standby voltage no matter whether the main power supply unit (111) outputs the DC operation power or not, wherein the DC application voltage is different from the standby voltage.

3. The power supply (11, 11') according to claim 1, wherein the main power supply unit (111) provides a standby voltage in the operation mode or the non-operation mode, wherein the DC application voltage is different from the standby voltage.

4. The power supply (11, 11') according to claim 1, wherein the DC application voltage is higher than 0.1 V but lower than 5V, or higher than 5V but lower than 240V.

5. The power supply (11, 11') according to claim 4, wherein the DC application voltage is 12V.

6. The power supply (11, 11') according to claim 3, wherein the standby voltage is 5V.

7. The power supply (11, 11') according to claim 1, wherein the application power unit (112) also provides the DC application voltage in the operation mode.

8. A computer chassis (1), comprising:
a chassis frame (14);
a power supply (11, 11') according to any one of claims 1 to 7, installed to the chassis frame (14), electrically coupling to an external AC power (AC), providing an operation voltage in an operation mode, and providing a DC application voltage in a non-operation mode according to the external AC power (AC); and
an application module (12, 12', 12a, 12b), installed to the chassis frame (14), and electrically coupled to the DC application voltage, such that the application module (12, 12', 12a, 12b) is operated according to the DC application voltage.

9. The computer chassis (1) according to claim 8, wherein the application module (12, 12', 12a, 12b) is a charging module which provides a charging power according to the DC application voltage.

10. The computer chassis (1) according to claim 8, wherein the application module (12, 12', 12a, 12b) is further electrically coupled to the standby voltage.

11. The computer chassis (1) according to claim 8, wherein the application module (12, 12', 12a, 12b) is removably installed to the chassis frame (14).

12. The computer chassis (1) according to claim 9, wherein the application module (12, 12', 12a, 12b) is a QC2.0 (Quick charge 2.0) charging module.

13. The computer chassis (1) according to claim 8, wherein the application module (12, 12', 12a, 12b) is a wireless charging module.

14. The computer chassis (1) according to claim 8, wherein the application module (12, 12', 12a, 12b) is a fan module or a fan control module.

15. The computer chassis (1) according to claim 8, wherein the application module (12, 12', 12a, 12b) is a light module or a light control module.
